# EUROPEAN PATENT SPECIFICATION

(11) **EP 3 778 611 B1**
(45) Date of publication and mention of the grant of the patent: **12.10.2022**
(21) Application number: 19774865.0
(22) Date of filing: 26.03.2019
(51) Int. Cl.: C07F 9/09

(54) **SPHINGOMYELIN-DERIVED LIPID AND METHOD FOR PRODUCING SAME**
LIPID AUS SPHINGOMYELIN UND VERFAHREN ZU DESSEN HERSTELLUNG
LIPIDE DÉRIVÉ DE SPHINGOMYÉLINE ET PROCÉDÉ DE PRODUCTION CORRESPONDANT

(30) Priority: 27.03.2018 JP 2018060896
(43) Date of publication of application: 17.02.2021
(73) Proprietor: NOF Corporation, Shibuya-ku Tokyo 150-6019 (JP)
(72) Inventor: OTA, Masaki, Kawasaki-shi, Kanagawa 210-0865 (JP)
(74) Representative: Heubeck, Christian
(86) International application number: PCT/JP2019/012785
(87) International publication number: WO 2019/189133

(56) References cited:
- WO-A2-2005/120461
- WO-A2-2014/060942
- JP-A- H10 501 534
- IWAMORI M: "Beta-eliminative cleavage of 3-ketocerebroside and 3-ketosphingomyelin", CHEMISTRY AND PHYSICS OF LIPIDS, vol. 20, 1 January 1977 (1977-01-01), pages 193-203, XP055852021, -& IWAMORI M ET AL: "Beta-eliminative cleavage of 3-ketocerebroside and 3-ketosphingomyelin", CHEMISTRY AND PHYSICS OF LIPIDS, LIMERICK, IR, vol. 20, no. 3, 1 November 1977 (1977-11-01), pages 193-203, XP023390687, ISSN: 0009-3084, DOI: 10.1016/0009-3084(77)90034-2 [retrieved on 1977-11-01]
- Anonymous: "COATSOME NM-10 (Egg-SPM) | Phospholipids", , 1 January 2018 (2018-01-01), pages 1-1, XP055852026, Retrieved from the Internet: URL:https://www.dds-drug.com/dds-products/ index.php?dispatch=products.view&product_i d=261 [retrieved on 2021-10-18]

## Description

### [Technical Field]

The present invention relates to a sphingomyelin-derived lipid that can be utilized for pharmaceutical use and cosmetic use, and a production method thereof.

### [Background Art]

In the field of drug delivery system (DDS), the research of pharmaceutical products using a liposome constituted of phospholipid, sphingolipid, cholesterol and the like as a carrier has been actively performed, and several products are available on the market. Liposomes can suppress the side effects of internally encapsulated drugs, or prevent decomposition of compounds unstable in the body. In addition, various functions can be imparted to the liposomes by modifying the liposome surface. For example, liposomes modified with polyethylene glycol can improve blood retention property compared with liposomes without the modification.

Some of the drugs that are encapsulated in liposomes require an acidic environment of pH2 - 4 to maintain the chemical stability during retention in blood. Phospholipid is used most frequently as a constituent component of the liposome. Since phospholipid has an ester bond, and the ester bond is easily decomposed in an acidic environment, the use of sphingolipid having no ester bond, particularly, sphingomyelin has been studied.

For example, in patent document 1, a liposome composed of sphingomyelin and cholesterol, and a liposome composed of distearoylglycerophosphocholine and cholesterol were stored in an aqueous solution at pH2, and time-course amount of hydrolysate was measured. According thereto, about 40% of distearoylglycerophosphocholine was hydrolyzed for 4 hr, whereas the amount of hydrolysate of sphingomyelin was less than 5% even after 20 hr, which shows that sphingomyelin having no ester bond is significantly stable in an acidic solution compared with phospholipid.
Patent document 2 discloses the hydrogenation of egg sphingomyelin using palladium/carbon in ethanol. Hydrogen is passed through the system over a palladium/carbon catalyst and cyclohexene is added afterwards (for reaction workup) to quench any active catalyst remaining. Cyclohexene does not serve as a reactant. Such reaction conditions lead to a dihydrosphingomyelin comprising a characteristic hydroxy group.

As described above, it has been found that sphingomyelin is useful as a constituent component of liposome. On the other hand, it has also been reported that sphingomyelin promotes membrane fusion of a part of membrane fusion viruses. Semliki Forest virus which is mediated by mosquito is taken into the cell by endocytosis, then fused to the endosomal membrane by the action of a membrane fusion protein to release the viral genome into the cytoplasm. Non-patent document 1 has reported that sphingomyelin or ceramide is required for the membrane fusion. Furthermore, in non-patent document 2, ceramide analogs were synthesized and the membrane fusion promoting effect of the analogs was evaluated. Non-patent document 2 has reported that ceramide analogs that do not have a secondary hydroxy group or double bond showed markedly reduced the membrane fusion promoting effect compared to ceramide. Administration of a liposome containing sphingomyelin as a constituent component increases the apparent in vivo concentration of sphingomyelin, and may promote membrane fusion of viruses. Accordingly, a constituent component of a liposome that is stable in an acidic solution and does not promote membrane fusion of a membrane fusion virus such as Semliki Forest virus is desired.

### [Document List]

### [Patent document]

Patent document 1: JP-A-H10-501534
Patent document 2 : WO 2005/120461

### [non-patent documents]

Non-patent document 1: EMBO J., 13, 2797-2804 (1994)
Non-patent document 2: Journal of Virology, Vol.69, No.5, 3220-3223 (1995)

### [Summary of Invention]

### [Technical Problem]

The development of a constituent component of a liposome for a DDS carrier that has stability equivalent to that of sphingomyelin in an acidic solution and does not show a membrane fusion promoting effect on viruses is desired.

### [Solution to Problem]

The present inventors have conducted intensive studies and found that a sphingomyelin-derived lipid represented by the following formula (1) in which a carbon-carbon double bond in sphingomyelin has been rearranged and the structure has further changed to a more stable keto form by keto-enol tautomerism is obtained by stirring sphingomyelin and palladium carbon in lower alcohol in the presence of cyclohexene, which resulted in the completion of the present invention.

That is, the present invention relates to a sphingomyelin-derived lipid represented by the formula (1): 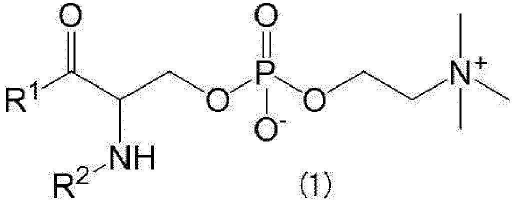 wherein R¹ is an alkyl group having 13 - 17 carbon atoms and R² is an acyl group having 12 - 24 carbon atoms, and a production method thereof.

Specifically, the present invention provides the following.
<1> A sphingomyelin-derived lipid represented by the formula (1) : 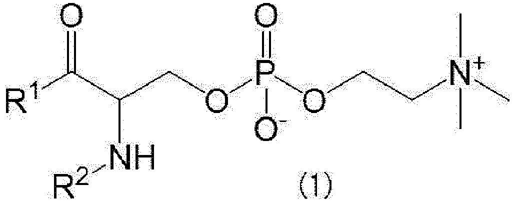 wherein R¹ is an alkyl group having 13 - 17 carbon atoms and R² is an acyl group having 12 - 24 carbon atoms (hereinafter sometimes to be referred to as "compound (1) of the present invention").
<2> The sphingomyelin-derived lipid of the above-mentioned <1>, wherein R¹ is an alkyl group having 15 carbon atoms.
<3> The sphingomyelin-derived lipid of the above-mentioned <1> or <2>, wherein R² is an acyl group having 16 - 20 carbon atoms.
<4> A method for producing the sphingomyelin-derived lipid of any of the above-mentioned <1> to <3>, comprising a step of mixing sphingomyelin and palladium carbon in a monohydric alcohol having 1 - 3 carbon atoms in the presence of cyclohexene under a nitrogen atmosphere.
<5> The production method of the above-mentioned <4>, wherein the sphingomyelin is a sphingomyelin derived from egg yolk and wherein in formula (1), R¹ is an alkyl group having 15 carbon atoms, and R² is an acyl group having 12-24 carbon atoms with generally 70 to 90% being an acyl group having 16 carbon atoms, 5 to 15% being an acyl group having 18 carbon atoms, and the rest being an acyl group having 12 - 24 carbon atoms excluding 16 and 18 carbon atoms.

### [Advantageous Effects of Invention]

A sphingomyelin-derived lipid represented by the aforementioned formula (1) does not have a secondary hydroxy group or a carbon-carbon double bond. Therefore, the lipid is useful as a liposome constituent component that has a structure similar to that of sphingomyelin and does not promote membrane fusion of membrane fusion viruses.

### [Brief Description of Drawings]

Fig. 1 shows the chemical structure of the sphingomyelin-derived lipid obtained in Example 1, ¹H-NMR chart, and the assignment of each peak.
Fig. 2 shows the IR spectrum chart of the sphingomyelin-derived lipid obtained in Example 1, and the assignment of each peak.

### [Description of Embodiments]

The present invention is explained in detail below.

### (Definition)

In the present specification, the "alkyl group having 13 - 17 carbon atoms" means a linear or branched chain alkyl group having 13 - 17 carbon atoms. It is preferably a linear alkyl group having 13 - 17 carbon atoms (e.g., tridecyl group, tetradecyl group, pentadecyl group, hexadecyl group, heptadecyl group etc.). Among these, a linear alkyl group having 15 carbon atoms (e.g., pentadecyl group) is particularly preferable.

In the present specification, the "acyl group having 12 - 24 carbon atoms" means a monovalent group obtained by removing a hydroxy group from a carboxy group of linear or branched chain carboxylic acid having 12 - 24 carbon atoms. It is preferably a linear acyl group having 12 - 24 carbon atoms (e.g., lauroyl group, myristoyl group, myristoleoyl group, palmitoyl group, palmitoleoyl group, stearoyl group, oleoyl group, linoleoyl group, linolenoyl group, eicosanoyl group, eicosadienoyl group, eicosatrienoyl group, eicosatetraenoyl group, docosanoyl group, tetracosanoyl group etc.), more preferably a linear acyl group having 14 - 20 carbon atoms (e.g., myristoyl group, myristoleoyl group, palmitoyl group, palmitoleoyl group, stearoyl group, oleoyl group, linoleoyl group, linolenoyl group, eicosanoyl group, eicosadienoyl group, eicosatrienoyl group, eicosatetraenoyl group etc.), particularly preferably a linear acyl group having 16 - 20 carbon atoms (e.g., palmitoyl group, palmitoleoyl group, stearoyl group, oleoyl group, linoleoyl group, linolenoyl group, eicosanoyl group, eicosadienoyl group, eicosatrienoyl group, eicosatetraenoyl group etc.).

In the present specification, the "lower alcohol" means a monohydric alcohol having 1 - 3 carbon atoms. Specifically, methanol, ethanol, 1-propanol, 2-propanol and the like can be mentioned.

### (Compound (1) of the present invention)

As the compound (1) of the present invention, the following compounds are preferable.

### [Compound (1A)]

Compound (1) of the aforementioned formula (1), wherein R¹ is an alkyl group having 15 carbon atoms (e.g., pentadecyl group), and R² is an acyl group having 14 - 20 carbon atoms (e.g., myristoyl group, myristoleoyl group, palmitoyl group, palmitoleoyl group, stearoyl group, oleoyl group, linoleoyl group, linolenoyl group, eicosanoyl group, eicosadienoyl group, eicosatrienoyl group, eicosatetraenoyl group).

### [Compound (1B)]

The compound (1) of the aforementioned formula (1), wherein R¹ is an alkyl group having 15 carbon atoms (e.g., pentadecyl group), and R² is an acyl group having 16 - 20 carbon atoms (e.g., palmitoyl group, palmitoleoyl group, stearoyl group, oleoyl group, linoleoyl group, linolenoyl group, eicosanoyl group, eicosadienoyl group, eicosatrienoyl group, eicosatetraenoyl group).

Specific preferable examples of the compound (1) of the present invention include a compound represented by the following formula and obtained in the below-mentioned Example 1:

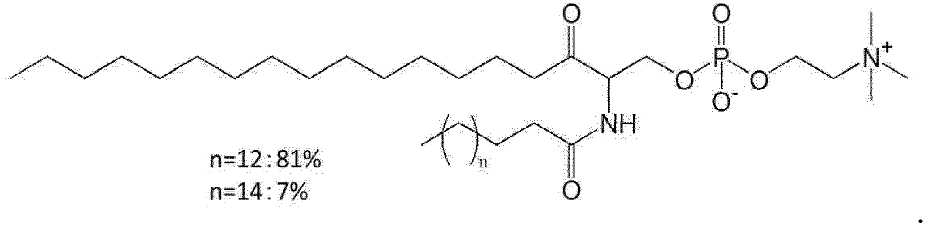

The compound (1) of the present invention has a structure similar to that of sphingomyelin, but does not have a secondary hydroxy group or a carbon-carbon double bond in the molecule. According to the description of the aforementioned non-patent document 2 (Journal of Virology, Vol.69, No.5, 3220-3223 (1995)), it is clear that compound (1) does not promote membrane fusion of membrane fusion viruses.

### (Production method of compound (1) of the present invention)

The compound (1) of the present invention can be produced by subjecting sphingomyelin and palladium carbon to a mixing step in a monohydric alcohol having 1 - 3 carbon atoms in the presence of cyclohexene under a nitrogen atmosphere.

The sphingomyelin to be used as a starting material may be a natural product or a synthetic product. In the case of a natural product, a sphingomyelin derived from egg yolk is preferable from the aspect of the availability.

When egg-yolk sphingomyelin is used as a starting material, R¹ in the aforementioned formula (1) is an alkyl group having 15 carbon atoms. While R² varies somewhat depending on the chicken feed consumed when the egg to be the starting material is produced and the growth environment, generally, 70 to 90% is an acyl group having 16 carbon atoms, 5 to 15% is an acyl group having 18 carbon atoms, and the rest is an acyl group having 12 - 24 carbon atoms excluding 16 and 18 carbon atoms. The acyl group having 16 carbon atoms is specifically a palmitoyl group or a palmitoleoyl group. The acyl group having 18 carbon atoms is specifically a stearoyl group, an oleoyl group, a linoleoyl group, or a linolenoyl group. An acyl group having 12 - 24 carbon atoms excluding 16 and 18 carbon atoms specifically includes a lauroyl group, a myristoyl group, a myristoleoyl group, eicosanoyl group, an eicosadienoyl group, an eicosatrienoyl group, an eicosatetraenoyl group, a docosanoyl group, a tetracosanoyl group and the like.

When sphingomyelin of a synthetic product is used as a starting material, R¹ in the aforementioned formula (1) is an alkyl group having 13 - 17 carbon atoms, preferably an alkyl group having 15 carbon atoms. R² in the aforementioned formula (1) is an acyl group having 12 - 24 carbon atoms, preferably, an acyl group having 14 - 20 carbon atoms, more preferably an acyl group having 16 - 20 carbon atoms. Specifically, a lauroyl group, a myristoyl group, a myristoleoyl group, a palmitoyl group, a palmitoleoyl group, a stearoyl group, an oleoyl group, a linoleoyl group, a linolenoyl group, an eicosanoyl group, an eicosadienoyl group, an eicosatrienoyl group, an eicosatetraenoyl group, a docosanoyl group, a tetracosanoyl group and the like can be mentioned.

The compound represented by the aforementioned formula (1) encompasses not only a single compound in which R² in the aforementioned formula (1) is constituted only of an acyl group having the same chain length, but also a mixture of plural compounds wherein R² has an acyl group having a different chain length.

The cyclohexene used for producing the compound (1) of the present invention is not particularly limited as long as it is generally available, and a commercially available product can be used as it is. When the amount of cyclohexene used is too small, the reaction does not proceed, and when it is too large, the economic efficiency decreases. Therefore, the amount is preferably 0.5 to 5 times by weight, more preferably 1 to 3 times by weight, based on the amount of sphingomyelin as the starting material.

The lower alcohol used as the solvent is a monohydric alcohol having 1 - 3 carbon atoms (e.g., methanol, ethanol, 1-propanol, 2-propanol, etc.). When the amount of the lower alcohol used is too small, stirring of the reaction solution becomes difficult, and when it is too large, the economic efficiency decreases. Therefore, the amount is preferably 3 to 50 times by weight, more preferably 5 to 20 times by weight, based on the amount of sphingomyelin as the starting material.

The palladium carbon is not particularly limited as long as it is generally available as a catalyst for hydrogenation reaction. While the content of palladium in the palladium carbon is also not particularly limited, the palladium content of generally available palladium carbon is 2 to 10%. Palladium carbon is usually sold as a water-containing product in view of the risk of ignition in a dry state.

When palladium carbon is used in a larger amount, the reaction proceeds more easily. However, when the amount is too large, the economic efficiency unpreferably decreases. Therefore, the amount is preferably 0.01 to 1.0 times by weight, more preferably 0.05 to 0.5 times by weight, based on the amount of sphingomyelin as the starting material.

The compound (1) of the present invention is produced under an inert gas atmosphere. The inert gas atmosphere means a state in which the air existing in the reaction system is replaced with an inert gas. The inert gas used according to the invention is nitrogen.

The reaction temperature is not particularly limited as long as the lower alcohol to be used as a solvent exists as a liquid and the starting material sphingomyelin is dissolved. The reaction temperature is preferably room temperature - 60°C. As used herein, the room temperature refers to a temperature of 15 - 30°C unless otherwise indicated.

The reaction time varies depending on the kind and amount of the starting material and solvent to be used, and is generally 30 min to 24 hr.

After the reaction, palladium carbon is filtered off, and the solvent is evaporated to give a crude product of a sphingomyelin-derived lipid represented by the formula (1). The purity of the sphingomyelin-derived lipid can be increased by subjecting the crude product to a purification step. As the purification step, one or more can be selected from crystallization, recrystallization, column chromatography, and the like, which are generally performed during chemical synthesis in the pertinent field. To obtain a high-purity sphingomyelin-derived lipid, purification by column chromatography is preferable.

As the fixed phase to be used in the column chromatography is preferably unmodified silica gel. The shape and particle size of the silica gel are not particularly limited. When the amount of silica gel to be used is too small, impurities are not separated sufficiently, and when it is too large, a large amount of solvent and time are required. Therefore, the amount is preferably 5 to 50 times by weight, more preferably 10 to 30 times by weight, based on the amount of the crude product.

The solvent (eluent) to be used for the mobile phase of column chromatography is not particularly limited as long as it is a solvent generally used for column chromatography of phospholipids. A representative solvent is a mixed solvent of chloroform/methanol or chloroform/methanol/water.

The production rate of the sphingomyelin-derived lipid represented by the formula (1) relative to the charged sphingomyelin during the reaction, and the purity of the obtained sphingomyelin-derived lipid can be calculated by measuring the ¹H-NMR spectrum. The deuterated solvent to be used in the ¹H-NMR measurement is not particularly limited as long as the sphingomyelin-derived lipid is soluble therein and the solvent peak does not overlap with the peak of the lipid.

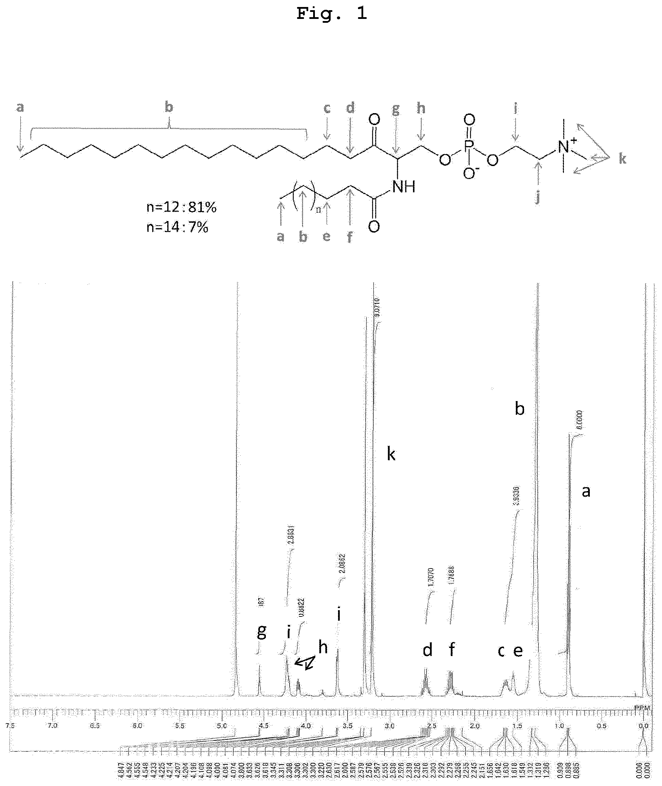

While the present invention is explained in the following by referring to Example 1, the present invention is not limited thereto. In Example 1, deuterated methanol added with tetramethylsilane was used as the internal standard. The integrated value of each peak was calculated by setting the peak derived from the proton of the terminal methyl group of the alkyl group and the acyl group at 0.88 ppm to 6 (Fig. 1). The production of sphingomyelin-derived lipid was calculated from the integrated value (theoretical value: 2.0) of the peak of methylene adjacent to the ketone group appearing at 2.58 ppm.

IR spectrum was measured by the pressurized tablet method.

### [Example 1]

### Synthesis of sphingomyelin-derived lipid

In a 500 mL four-necked flask were added egg-yolk sphingomyelin (manufactured by NOF CORPORATION; COATSOME NM-10; R¹ is an alkyl group having 15 carbon atoms, R² contains an acyl group having 16 carbon atoms (81%) and an acyl group having 18 carbon atoms (7%)) (40 g), palladium carbon (manufactured by N.E. CHEMCAT Corporation, palladium content 5 wt%) (10 g), ethanol (200 g), and cyclohexene (manufactured by KANTO CHEMICAL CO., INC.) (60 g), and the mixture was reacted at 55°C for 6 hr under a nitrogen atmosphere. The reaction solution was filtered and the filtrate was concentrated to give a crude product. The crude product was purified by silica gel column chromatography (eluent: mixed solvent of chloroform/methanol/water) to give the title compound as a white solid (yield: 1.96 g, 4.9%).

¹H-NMR (600 MHz, δppm, CD₃OD): 0.88(6H,t), 1.2 - 1.4 (48H,t), 1.55(2H,m), 1.64(2H,m), 2.29(2H,m), 2.58(2H,m), 3.22(9H,s), 3.62(2H,t), 4.09(1H,m), 4.21(3H,m), 4.56(1H,t)

According to the ¹H-NMR measurement results (Fig. 1) of the sphingomyelin-derived lipid obtained in Example 1, it was found that the present compound did not have a double bond since an olefin proton-derived peak did not exist within the range of 5 to 7 ppm. In addition, it was confirmed that the sphingomyelin-derived lipid represented by the formula (1) was obtained with a purity of 85% since the integrated value of the peak at 2.58 ppm (proton of d in Fig. 1) was 1.7070.

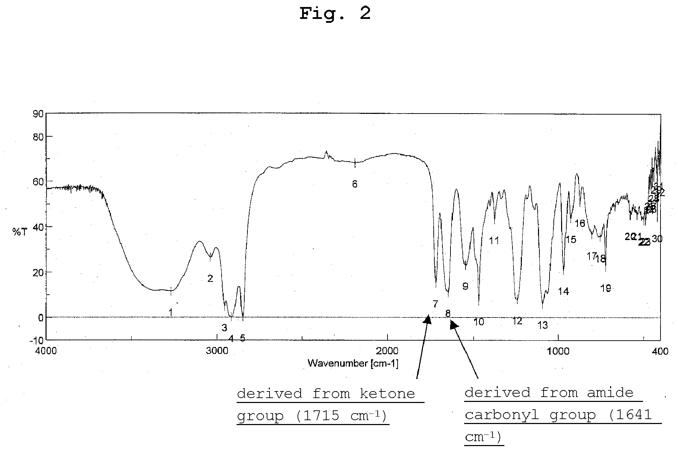

According to the measurement results of the IR spectrum (Fig. 2) of the sphingomyelin-derived lipid obtained in Example 1, it could be confirmed that a peak derived from a ketone group (1715 cm⁻¹) was generated adjacent to a peak derived from an amide carbonyl group (1641 cm⁻¹).

### [Industrial Applicability]

A sphingomyelin-derived lipid of the formula (1) of the present invention does not have a secondary hydroxy group or a carbon-carbon double bond. Therefore, the lipid is useful as a liposome constituent component that has a structure similar to that of sphingomyelin and does not promote membrane fusion of membrane fusion viruses.

## Claims

1. A sphingomyelin-derived lipid represented by the formula (1) : 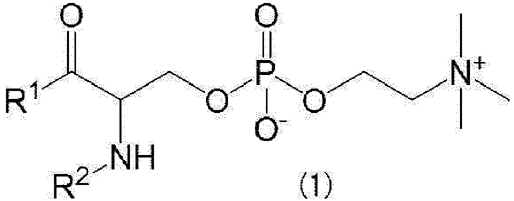 wherein R¹ is an alkyl group having 13 - 17 carbon atoms and R² is an acyl group having 12 - 24 carbon atoms.

2. The sphingomyelin-derived lipid according to claim 1, wherein R¹ is an alkyl group having 15 carbon atoms.

3. The sphingomyelin-derived lipid according to claim 1 or 2, wherein R² is an acyl group having 16 - 20 carbon atoms.

4. A method for producing the sphingomyelin-derived lipid according to any one of claims 1 to 3, comprising a step of mixing sphingomyelin and palladium carbon in a monohydric alcohol having 1 - 3 carbon atoms in the presence of cyclohexene under a nitrogen atmosphere.

5. The production method according to claim 4, wherein the sphingomyelin is egg yolk sphingomyelin, and wherein in formula (1), R¹ is an alkyl group having 15 carbon atoms, and R² is an acyl group having 12-24 carbon atoms with generally 70 to 90% being an acyl group having 16 carbon atoms, 5 to 15% being an acyl group having 18 carbon atoms, and the rest being an acyl group having 12 - 24 carbon atoms excluding 16 and 18 carbon atoms.

## Patentansprüche

1. Von Sphingomyelin abgeleitetes Lipid, dargestellt durch die Formel (1): 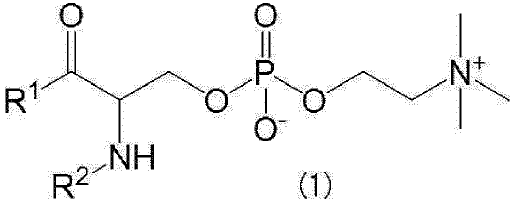 wobei R¹ eine Alkylgruppe mit 13-17 Kohlenstoffatomen und R² eine Acylgruppe mit 12-24 Kohlenstoffatomen ist.

2. Von Sphingomyelin abgeleitetes Lipid nach Anspruch 1, wobei R¹ eine Alkylgruppe mit 15 Kohlenstoffatomen ist.

3. Von Sphingomyelin abgeleitetes Lipid nach Anspruch 1 oder 2, wobei R² eine Acylgruppe mit 16-20 Kohlenstoffatomen ist.

4. Verfahren zur Herstellung des von Sphingomyelin abgeleiteten Lipids nach einem der Ansprüche 1 bis 3, umfassend einen Schritt des Mischens von Sphingomyelin und Palladium-Kohlenstoff in einem einwertigen Alkohol mit 1-3 Kohlenstoffatomen in Gegenwart von Cyclohexen unter einer Stickstoffatmosphäre.

5. Herstellungsverfahren nach Anspruch 4, wobei das Sphingomyelin Eigelbsphingomyelin ist und wobei in Formel (1) R¹ eine Alkylgruppe mit 15 Kohlenstoffatomen ist und R² eine Acylgruppe mit 12-24 Kohlenstoffatomen ist,
wobei im Allgemeinen 70 bis 90% eine Acylgruppe mit 16 Kohlenstoffatomen sind, 5 bis 15% eine Acylgruppe mit 18 Kohlenstoffatomen sind und der Rest eine Acylgruppe mit 12-24 Kohlenstoffatomen, ausgenommen 16 und 18 Kohlenstoffatome, ist.

## Revendications

1. Lipide dérivé de sphingomyéline représenté par la formule (1) : 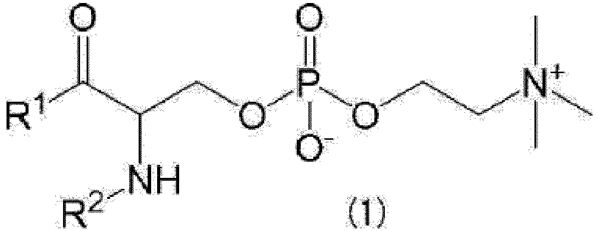 dans laquelle R¹ est un groupe alkyle qui comporte de 13 à 17 atomes de carbone et R² est un groupe acyle qui comporte de 12 à 24 atomes de carbone.

2. Lipide dérivé de sphingomyéline selon la revendication 1, dans lequel R¹ est un groupe alkyle qui comporte 15 atomes de carbone.

3. Lipide dérivé de sphingomyéline selon la revendication 1 ou 2, dans lequel R² est un groupe acyle qui comporte de 16 à 20 atomes de carbone.

4. Procédé pour produire le lipide dérivé de sphingomyéline selon l'une quelconque des revendications 1 à 3, comprenant une étape de mélange de sphingomyéline et de palladium-carbone dans un alcool monohydrique qui comporte de 1 à 3 atome(s) de carbone en présence de cyclohexène sous une atmosphère d'azote.

5. Procédé de production selon la revendication 4, dans lequel la sphingomyéline est de la sphingomyéline jaune d'œuf, et dans lequel, dans la formule (1), R¹ est un groupe alkyle qui comporte 15 atomes de carbone et R² est un groupe acyle qui comporte de 12 à 24 atomes de carbone, de façon générale, 70 % à 90 % étant un groupe acyle qui comporte 16 atomes de carbone, 5 % à 15 % étant un groupe acyle qui comporte 18 atomes de carbone et le reste étant un groupe acyle qui comporte de 12 à 24 atomes de carbone, à l'exclusion de 16 et 18 atomes de carbone.
